# EUROPEAN PATENT APPLICATION

(11) **EP 4 763 532 A1**
(43) Date of publication of application: **24.06.2026**
(21) Application number: 24383426.4
(22) Date of filing: 20.12.2024
(51) Int. Cl.: B60B 7/20

(54) **WHEEL TRIM FOR VEHICLES**

(71) Applicant: Zanini Auto Grup, S.A., 08150 Parets del Vallés - Barcelona (ES)
(72) Inventor: LOSILLA BASSET, Eduardo, 08150 PARETS DEL VALLÉS (Barcelona) (ES); EGUINOA DE SAN ROMÁN, Gonzalo, 08150 PARETS DEL VALLÉS (Barcelona) (ES); COROMINAS SERRAT, Xavier, 08150 PARETS DEL VALLÉS (Barcelona) (ES); NOVELL PERELLÓ, Ramon Maria, 08150 PARETS DEL VALLÉS (Barcelona) (ES); LI, Liehua, 08150 PARETS DEL VALLÉS (Barcelona) (ES)
(74) Representative: Herrero & Asociados, S.L.

(57) **Abstract**

The wheel trim for vehicles comprises a base (1) comprising fixation elements (3) for its fixation to a wheel; a rotor (4) fixed to the base (1); a support (8) that is attached to the rotor (4) by a first bearing (7); a logo (17) that is attached to the support (8), wherein the logo (17) is attached to the support (8) by a second bearing (15).

It permits to provide a wheel trim for vehicles that assures a perfect orientation of the logo independently of the magnetic field generated and to the bearing friction force.

## Description

The present invention relates to a wheel trim for vehicles, in particular to a wheel trim that includes a logo that is always correctly orientated independently of the magnetic field generated and to the bearing friction force.

### Background of the invention

It is common to use wheel trims to decorate automobile wheels.

The wheel trims can have different sizes, and they can cover the whole wheel, an area up to the wheel nuts or the area of the spindle. A common feature of all wheel trims is that they include an emblem in the central area.

This emblem usually shows the logo of the vehicle trademark and turns when the car is moving.

It is known, e.g. from EP3698982A1, a system with a rotatable emblem which includes a bearing and an eccentric weight that maintains the orientation of the logo when the wheel is rotating, so that the logo can be seen in a fixed position.

An additional benefit to improvement of the appearance is to include a generator that illuminates the logo, so that the logo can be illuminated using electric energy generated during the rotation of the wheel by using a magnet and a coil included in the floating area of the wheel trim. Therefore, the logo can be seen also during the night.

The problem of this solution comes from the reverse magnetic field generated in a direction opposite to the direction of the electric generation having consequently a bad orientation of the logo with an angle that increases as the speed of the vehicle increases.

From KR101558323B1 it is known a way to solve this problem using one rotatable power generator and a logo that rotates around the same axis but separated between them having each one a bearing and an eccentric weight.

In this way, the reverse magnetic field generated in a direction opposite to the direction of the electric generation does not affect the orientation of the logo. However, this solution does not prevent the angular deviation of the logo caused by the friction of the bearing that is fixed to the shaft that rotates together with the car wheel.

### Description of the invention

Therefore, an objective of the present invention is to provide a wheel trim for vehicles that assures a perfect orientation of the logo independently of the magnetic field generated and to the bearing friction force.

The wheel trim for vehicles of the invention solves the above-mentioned disadvantages and has other advantages which will be described below.

The wheel trim for vehicles according to the present invention is described in claim 1, and the dependent claims include additional features that are optional.

In particular, the wheel trim for vehicles comprises:
- a base comprising fixation elements for its fixation to a wheel;
- a rotor fixed to the base;
- a support that is attached to the rotor by a first bearing;
- a logo that is attached to the support,
wherein the logo is attached to the support by a second bearing.

It must be pointed out that the first bearing acts between the base and support for compensating the rotation of the base, that is fixed to the wheel, that rotates at high speed, and the second bearing acts between the support and the logo for compensating the rotation of the support, which only rotates slightly, compared with the high rotation of the wheel.

Preferably, the rotor comprises one or more magnets and the support comprises a stator, and one or more LEDs, said one or more LEDs illuminate the logo.

Furthermore, the logo comprises preferably a weight and the logo is mounted on a light guide.

According to a preferred embodiment, the support comprises an axis and the second bearing is placed between the axis and the logo.

Preferably, the support comprises a counterweight and the support comprises a printed circuit board.

With the wheel trim according to the present invention, the logo is maintained perfectly oriented, avoiding the angular deviation due to the reverse magnetic field generated and also the angular deviation due to the friction of the first bearing.

### Brief description of the drawings

For a better understanding of what has been explained above, some drawings are included in which, schematically and only by way of a non-limiting example, a practical case of embodiment is represented.
Figure 1 is an exploded perspective view of the wheel trim according to the present invention; and
Figure 2 is a sectional side view of the wheel trim according to the present invention.

### Description of a preferred embodiment

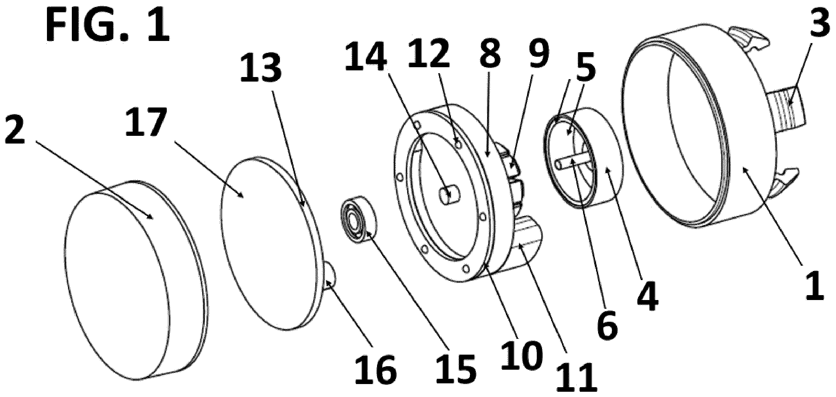

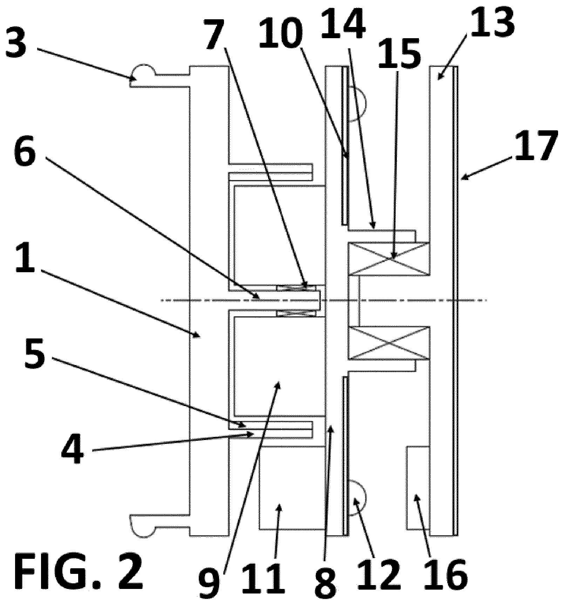

Figures 1 and 2 show the wheel trim according to the present invention, comprising a base (1) that protects in combination with a transparent cover (2) the components of the wheel trim according to the present invention. For simplicity reasons, the transparent cover (2) is not shown in Fig. 2.

The base (1) comprises fixation elements (3) for fixing the wheel trim either to a wheel cover or directly to a wheel, not shown in the drawings.

A rotor (4) is fixed to the base (1) and comprises one or more magnets (5) that emit a magnetic field. Said one or more magnets (5) are fixed in an internal surface of the rotor (4), that is preferably circular.

A rotating axis (6) protrudes from the center of the rotor (4) and through a first bearing (7) that is connected to a support (8).

This support (8) comprises on one side a stator (9), on the other side a printed circuit board (10), and a counterweight (11) for maintaining the stator (9) in a fixed position independent of the rotation of the wheel.

The stator (9) generates electrical energy when rotating in the magnetic field generated by the rotor (4), and the stator (9) is electrically connected to the printed circuit board (10), and this printed circuit board (10) to at least one LED (12). Therefore, the light emitted by the LED or LEDs (12) comes from the electrical power generated by the stator (9).

The LEDs (12) may emit light in a direction perpendicular (as shown on the figures) or parallel (not shown on the figures) to the printed circuit board (10) in order to better illuminate a light guide (13) to direct the light to a logo (17) in the most efficient way.

The support (8) also comprises in its center an axis (14) and it is connected to the light guide (13) by a second bearing (15).

The light guide (13) also comprises a weight (16) to maintain the logo (17) perfectly horizontal and not submitted to the angle deviation of the stator (9) in the support (8) due to the reverse magnetic field generated.

In order to protect the components of the wheel trim according to the present invention from the environment the transparent cover (2) encapsulates them together with the base (1).

Due to the fact that the second bearing (15) has only to compensate the angle deviation of the stator (9) and consequently of the support (8), and not the rotation of the wheel, the angle deviation of the guide light (13) and the logo (17) is suppressed, showing to the pedestrians the logo (17) in a perfect orientation and visible during the day and the night while the car is driving.

It must be pointed out that the term "bearing" used in the description and in the claims should be interpreted that includes any kind of bearing, including or not rolling elements such as balls or rollers, i.e., including also plain bearings or friction bearings, usually known as bushings.

Although reference has been made to a specific embodiment of the invention, it is obvious to a person skilled in the art that the wheel trim for vehicles described is susceptible to numerous variations and modifications, and that all the details mentioned can be replaced by technically equivalent ones, without departing from the scope of protection defined by the appended claims.

## Claims

1. Wheel trim for vehicles comprising:
- a base (1) comprising fixation elements (3) for its fixation to a wheel;
- a rotor (4) fixed to the base (1);
- a support (8) that is attached to the rotor (4) by a first bearing (7);
- a logo (17) that is attached to the support (8),
**characterized in that** the logo (17) is attached to the support (8) by a second bearing (15).

2. Wheel trim for vehicles according to claim 1, wherein the rotor (4) comprises one or more magnets (5) and the support (8) comprises a stator (9), and one or more LEDs (12), said one or more LEDs (12) illuminate the logo (17).

3. Wheel trim for vehicles according to claim 1 or 2, wherein the logo (17) comprises a weight (16).

4. Wheel trim for vehicles according to any one of the previous claims, wherein the logo (17) is mounted on a light guide (13).

5. Wheel trim for vehicles according to claim 1, wherein the support (8) comprises an axis (14) and the second bearing (15) is placed between the axis (14) and the logo (17).

6. Wheel trim for vehicles according to claim 1, wherein the support (8) comprises a counterweight (11).

7. Wheel trim for vehicles according to claim 1, wherein the support (8) comprises a printed circuit board (10).
